# EUROPEAN PATENT SPECIFICATION

(11) **EP 1 908 279 B1**
(45) Date of publication and mention of the grant of the patent: **01.06.2016**
(21) Application number: 06769156.8
(22) Date of filing: 03.07.2006
(51) Int. Cl.: H04N 21/262

(54) **SYSTEM AND METHOD FOR THE CONSTRUCTION OF ELECTRONIC PROGRAM GUIDE THROUGH COOPERATIVE TRANSMISSION OF ELECTRONIC PROGRAM GUIDE DATA**
SYSTEM UND VERFAHREN ZUR KONSTRUKTION EINER ELEKTRONISCHEN PROGRAMMANLEITUNG DURCH COOPERATIVE ÜBERTRAGUNG ELEKTRONISCHER PROGRAMMANLEITUNGSDATEN
SYSTEME ET PROCEDE POUR L'ELABORATION DE GUIDE DE PROGRAMME ELECTRONIQUE (EPG) PAR TRANSMISSION COOPERATIVE DE DONNEES DE GUIDE CORRESPONDANTES

(30) Priority: 05.07.2005 KR 20050060089
(43) Date of publication of application: 09.04.2008
(73) Proprietor: Alticast Corp., Seoul 137-070 (KR)
(72) Inventor: RYU, Joo Hyeon, Seoul 137-900 (KR); KIM, Soo Woong, Seoul 156-090 (KR)
(74) Representative: Nederlandsch Octrooibureau
(86) International application number: PCT/KR2006/002599
(87) International publication number: WO 2007/004840

(56) References cited:
- WO-A1-01/58161
- GB-A- 2 325 537
- JP-A- 2000 152 113
- JP-A- 2004 193 920
- KR-A- 20040 082 056
- US-A1- 2002 066 101
- US-A1- 2004 123 317
- US-A1- 2004 210 824

## Description

### Technical Field

The present invention relates to a system and a method for the construction of electronic program guide (hereinafter, "EPG") service. More particularly, the present invention relates to a system and a method for the construction of EPG service through cooperative transmission of EPG data.

### Background Art

EPG is referred as program guide information for broadcast programs displayed on the screen of a digital TV or an application for operating the same. As one of essential applications in digital television, the EPG application receives television program guide information from a server, and processes and displays it for the user's convenience. At present, there are 4 to 5 public analog broadcasting channels, But, it is expected that several hundreds of channels will become available through digital broadcasting. Then, it will be difficult to find out which program is serviced on which channel. Thus, the EPG, which guides the scheduled broadcasting programs, will become an essential factor. For more details on EPG, please refer to Korean Patent Nos. 331,834 and 400,010.

EPG data includes a service description table (hereinafter, "SDT") and an event information table (hereinafter, "EIT"). The SDT provides basic channel informations such as channel number, channel name and channel contents, and the ETT provides program information such as program title, program starting time, etc. However, as the number of channels increases, the ETT data of broadcast programs are rapidly increasing, thereby resulting in the increase of the EPG data. At present, 7 days EPG data are provided through the broadcasting bandwidth of about 7 M. This means that the transmissions of EPG data through the broadcasting bandwidth will become more and more difficult. This needs to be managed properly without cost increase of the broadcasting service provider.

GB 2325537 discloses an EPG database that includes hyperlinks that can be provided in a data stream from an arbitrary source, but this is related to the availability of the information, not with an evaluation of the amount of information that can be transmitted through the broadcasting network.

US 2004/0210824 discloses a system and method for creating a data structure which is used to organize programming information (EPG), said programming information containing information from various sources. The information coming from various sources however is due to the availability of the information and the amount of data that can be transmitted through the broadcasting network is not addressed.

US 2002/066101 discloses a method for transmitting multiple "slices" of information for a particular location of a user interface, which can be used to present more information to a viewer for a limited-size viewing area. Multiple slices can be associated with a particular slice location of a user interface. In a first slice delivery and presentation scheme, multiple slices for a particular location of an interactive program guide (IPG) page are transmitted from the head-end at different times, and the slices can be appropriately time stamped for presentation at the designated times. However, the amount of data that is transmitted via broadcasting network is not determined according to the currently available broadcasting bandwidth.

US 2004/123317 discloses a method for providing an electronic program guide (EPG) for a television in which the entire EPG need not be periodically refreshed. It is to be understood that an EPG contains information for many increments, e.g., if an increment is a day, an EPG might contain fourteen days of information. Thus, when the refresh interval is one increment, the new (latest) day's worth of EPG information is sent. However, the amount of data that is transmitted via broadcasting network is not determined according to the currently available broadcasting bandwidth.

### Disclosure of Invention

### Technical Problem

An object of the present invention is to provide a system and a method for the efficient construction of EPG service.

Another object of the present invention is to construct EPG service on an interactive digital TV through cooperative transmissions through a forward path using the broadcasting network and through a return path using the communications network.

Still another object of the present invention is to construct EPG service on an interactive digital television through cooperative transmissions through a forward path using the broadcasting network and through a return path using the communications network, through efficient cooperation between an EPG transmission server for the forward path and an EPG head end server for the return path.

### Technical Solution

According to an embodiment of the present invention, there is provided a system for the construction of EPG service comprising: an EPG transmission server transmitting through a forward path mediated by a broadcasting network, a part of EPG data to be transmitted to a settop box and data into which request commands for remaining EPG data not transmitted via the broadcasting network are embedded; an EPG head end server transmitting the remaining EPG data in response to user's request through a return path mediated by a communication network; and a settop box equipped with an EPG application which processes the EPG data received from the EPG transmission server and the EPG head end server.

According to another embodiment of the present invention, there is provided a system for the construction of EPG service, wherein the EPG data transmitted through the forward path mediated by the broadcasting network includes both a service description table and an event information table.

According to further another embodiment of the present invention, there is provided a system for the construction of EPG service comprising: a) an EPG transmission server transmitting a part of EPG data to be transmitted to a settop box and data into which request commands for remaining EPG data not transmitted via the broadcasting network are embedded, comprising: an EPG data manager which manages the EPG data; a controller which checks currently available, broadcasting bandwidth and determines which EPG data should be transmitted via the broadcasting network; an EPG request command data embedder which produces the data into which the request commands for remaining EPG data not transmitted through the forward path mediated by the broadcasting are embedded; an encoder which encodes the EPG data and the data into which the request commands for the remaining EPG data are encoded; and a transceiver which receives and transmits the EPG data; b) an EPG head end server transmitting through a return path mediated by a communication network the remaining EPG data not transmitted from the broadcasting network to the settop box in response to user's request, comprising: a transceiver which receives the user's request signal for the remaining EPG data not transmitted through the forward path mediated by the broadcasting network and transmits the requested data to the settop box; an EPG data identifier which identifies the EPG data requested from the user; an EPG data manager which manages the EPG data; an encoder which encodes the EPG data to transmit through the forward path mediated by the communication network; and a controller which controls the transmission of the EPG data through the forward path mediated by the communication network; and c) a settop box equipped with an EPG application which processes the EPG data received from the EPG transmission server and the EPG head end server.

According to still another embodiment of the present invention, there is provided a system for the construction of EPG service, wherein the EPG transmission server which transmits a part of the EPG data through the forward path further comprises an EPG data extractor which extracts the EPG data not transmitted through the forward path mediated by the broadcasting network from the EPG data manager and transmits it to the EPG head end server.

According to still further another embodiment of the present invention, there is provided a system for the construction of EPG service, wherein the EPG head end server further comprises an EPG data converter which converts the EPG data into a format compatible with the EPG application installed into the settop box.

According to still further another embodiment of the present invention, there is provided a System for the construction of EPG service, wherein the determination by the controller of the EPG transmission server on which EPG data should be transmitted via the broadcasting network is performed based on a program broadcasting time.

According to still further another embodiment of the present invention, there is provided a system for the construction of EPG service, wherein the EPG data to be transmitted to the settop box is the EPG data for 7 days, of which the EPG data to be transmitted through the forward path being the EPG data for 1 day and the data in which the request command for the remaining EPG data not transmitted through the forward path mediated by the broadcasting network being the EPG data for the remaining 6 days.

According to still further another embodiment of the present invention, there is provided a method for the construction of EPG service on a settop box equipped with an EPG application, through cooperative transmissions of the EPG data from an EPG transmission server transmitting through a forward path mediated by a broadcasting network, a part of EPG data to be transmitted to a settop box and data into which request commands for remaining EPG data not transmitted via the broadcasting network are embedded, and from an EPG head end server transmitting the remaining EPG data in response to user's request through a return path mediated by a communication network, which comprises the steps of: transmitting, through the forward path mediated by the broadcasting network from an EPG transmission server to the settop box, a part of the EPG data and data into which the request commands for remaining EPG data not transmitted via the broadcasting network are embedded; in response to user's request signal for the remaining EPG data, transmitting, the request signal of the user to the EPG head end server through the return path mediated by a communication network; and receiving the EPG data requested by the user from the EPG head end server through the return path mediated by the communication network, and displaying it on a user's television.

### Advantageous Effects

. In accordance with the present invention, complete EPG data is provided to an interactive digital TV through cooperative transmissions through the forward path mediated by the broadcasting network and through the return path mediated by the communication network. This reduces significantly the broadcasting bandwidth allocated for the transmission of the EPG data, compared with the conventional method and system for the construction of EPG service. Using about 2 M or smaller bandwidth, the EPG service can be achieved. Analysis on utilization of the EPG data at a side of the user shows that the request for EPG data relevant to the program of today or very near future is prominent. And the program information for the future is sometimes requested based on a particular channel. Accordingly, by cooperative provisions of EPG data relevant to the programs of today or very near including both the service description table and the event information table through a broadcasting network and of the EPG data relevant to the remaining programs in response to the user's request via a communication network, EPG service can be effectively achieved without any scarificing the satisfaction of the user.

Also, the EPG service can be constructed effectively through cooperative interaction of the EPG transmission server that provides, through a forward path mediated by a broadcasting network, a part of EPG data to be transmitted to a settop box and data into which request commands for remaining EPG data not transmitted via the broadcasting network are embedded, and an EPG head end server transmitting the remaining EPG data in response to user's request through a return path mediated by a communication network. Further, the EPG head end server has extendibility applicable to all EPG applications.

### Brief Description of the Drawings

Fig. 1 is a block diagram illustrating a preferred embodiment of the system for the construction of EPG in accordance with the present invention.
Fig. 2 is a drawing illustrating a preferred embodiment of the EPG displayed on television screen of the user received from the EPG transmission server through forward path in accordance with the present invention.
Fig. 3 is a block diagram illustrating another preferred embodiment of the system for the construction of EPG in accordance with the present invention.

### Mode for the Invention

The EPG construction method of the present invention is characterized in that a part of total EPG data is transmitted to the user's settop box through a forward path mediated by a broadcasting network and the remaining EPG data is transmitted to then user's settop box through a return path mediated by a communication network in response to the user's request. Preferably, the EPG data to be transmitted via the broadcasting network and the EPG data to be transmitted via the communications network are determined based on the broadcasting time. For example, in accordance with the conventional method, EPG data for 7 days was transmitted to the user's settop box via the broadcasting network. In this case, it is required for a broadcasting bandwidth of at least 7 M in the transmission of the EPG data for 7 days. However, in accordance with the present invention, EPG data for only 1 day is transmitted via the broadcasting network and the EPG data for the next 6 days is transmitted to the settop box via the communication network upon the receipt of user's request. In this case, the EPG data transmitted via the broadcasting network requires less than 2 M of the broadcasting bandwidth, in which about 1 M for the EPG data for 1 day and less than 1 M for the data into which the request signals for the remaining EPG data for the next 6 days are encoded. Consequently, the broadcasting bandwidth allocated for delivery of the EPG data can be reduced significantly.

The system for the construction of EPG in accordance with the present invention comprises:
a) an EPG transmission server transmitting, through a forward path mediated by a broadcasting network, a part of EPG data to be transmitted to a settop box and data into which request commands for remaining EPG data not transmitted via the broadcasting network are embedded, comprising: an EPG data manager which manages the EPG data; a controller which checks currently available broadcasting bandwidth and determines which EPG data should be transmitted via the broadcasting network; an EPG request command data embedder which produces the data into which the request commands for the remaining EPG data are embedded; an encoder which encodes the EPG data and the data into which the request commands are encoded; and a transceiver which receives and transmits the EPG data;
b) an EPG head end server transmitting, through a return path mediated by a communication network, the remaining EPG data not transmitted from the broadcasting network to the settop box in response to user's request, comprising: a transceiver which receives the user's request signal for the remaining EPG data not transmitted via the broadcasting network and transmits the requested EPG data to the settop box; an EPG data identifier which identifies the EPG data requested from the user; an EPG data manager which manages the EPG data; an encoder which encodes the EPG data to transmit through the forward path mediated by the communication network; and a controller which controls the transmission of the EPG data through the forward path mediated by the communication network; and
c) a settop box equipped with an EPG application which processes the EPG data received from the EPG transmission server and the EPG head end server.

The EPG data transmitted through the forward path includes both the service description table ("SDT") and the event information table ("EIT"). That is, all the information including the basic channel information such as channel number, channel name and channel contents and the program information such as program title, program starting time, etc. are provided. This EPG data is the program guide information relevant to the programs of today or near future. For example, all the EPG data for the programs of today is provided to all the settop boxes of the users connected to the broadcasting network through the forward path. When a user selects the EPG data transmitted through the forward path, the data can be processed in real time because it is stored in the user's cache memory.

The remaining EPG data not transmitted through the forward path is transmitted from the EPG transmission server to all the settop boxes in a form of the data into which the request commands for the EPG data are embedded with aid of the EPG request signal data embedder. This data is the information for the future. For example, it is the EPG data for.the next 6 days. When the data is requested at the user end, the user's request is transmitted to the EPG head end server through the return path. That is, a new process begins to request the informations in response to the user's request.

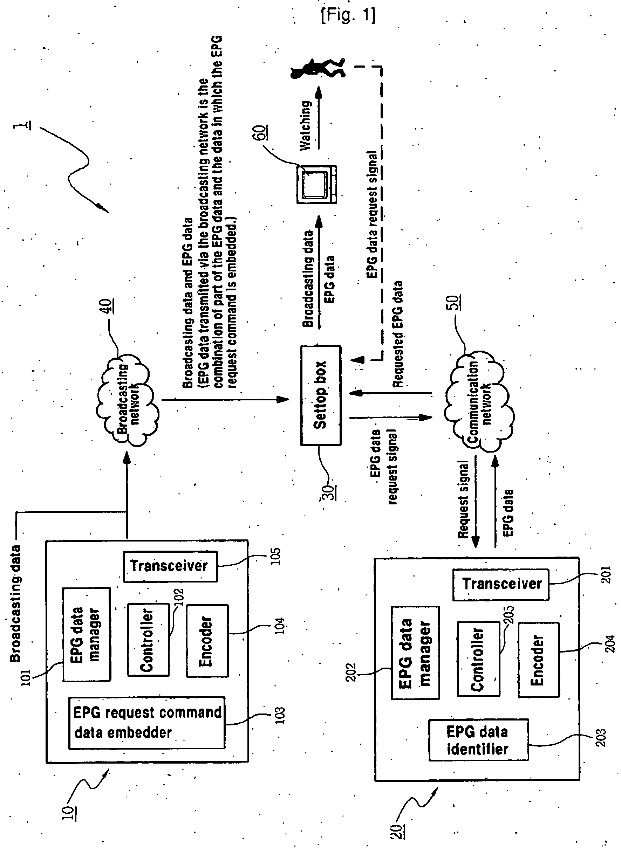

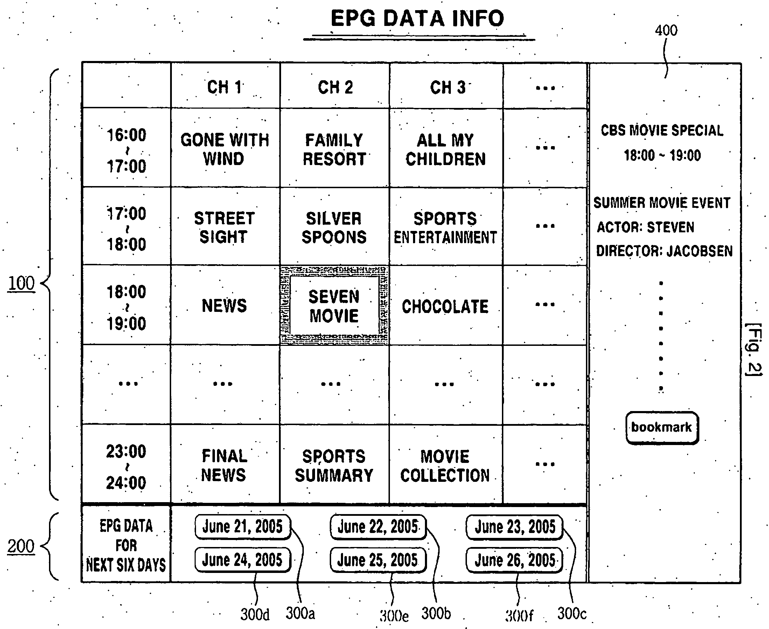

Fig. 1 is a block diagram illustrating a preferred embodiment of the system for the construction of EPG in accordance with the present invention, and Fig. 2 is a drawing illustrating a preferred embodiment of the EPG displayed on television screen of the user received from the EPG transmission server through a forward path in accordance with the present invention. The present invention will be more fully illustrated referring to Fig. 1 and Fig. 2.

As illustrated in Fig. 1, the system for the construction of EPG of the present invention (1) comprises an EPG transmission server (10) and an EPG head end server (20). The EPG transmission server (10) comprises an EPG data manager (101) which manages the EPG data, a controller (102) which checks currently available broadcasting bandwidth and determines which EPG data is to be transmitted via the broadcasting network, an EPG request command data embedder (103) which produces a data into which the request commands for the remaining EPG data not transmitted via the broadcasting network is embedded, an encoder (104) which encodes the EPG data and the data into which the request commands for the remaining EPG data not transmitted via the broadcasting network and a transceiver (105) which transmits and receives the EPG data. The encoded EPG data is transmitted to the user's settop box (30) through the forward path mediated by the broadcasting network (40) in combination with other broadcasting signals.

As illustrated in Fig. 2, the EPG data (100) for the programs of today includes both the service description table (SDT) and the event information table (EIT). However, the EPG data for the remaining 6 days (200) are expressed as icons (300a to 300f, totally 300) into which the request commands for the remaining EPG data is embedded. The user may acquire the EPG data of today (100) for a specific channel from the displayed EPG screen. More detailed additive information can be also acquired by selecting the title of the EPG data (100). Specifically, when the title of the EPG data (100) is selected, the information stored in the cache memory of the settop box (30) is displayed on a detailed information display window (400), which can be checked in real time:

To obtain the remaining EPG data (200) of the next days for a specific channel, the user selects one of the icons (300). Then, the user's request is delivered to the from the EPG head end server (20), and then the corresponding EPG data is delivered from the EPG head end server (20) through the return path and is displaced. In Fig. 2, the EPG data (200) are classified based on the date. However, they may also be classified based on channel. In this case, the EPG data for the specific date and specific channel may be displayed on the screen when the user selects an icon (300).

The EPG head end server (20) transmits the remaining EPG data not transmitted through the forward path in response to the user's request. For this purpose, the EPG head end server (20) comprises a transceiver (201) which receives the request signal for the remaining EPG data not transmitted via the broadcasting network from the user and transmits the data to the settop box of the user, an EPG data identifier (202) which identifies the EPG data requested from the user, an EPG data manager (203) which manages the EPG data, an encoder (204) which encodes the EPG data, and a controller (205) which controls the transmission of the EPG data via the communication network.

First, when the user selects one of the icons (300) into which the request command for the remaining EPG data (200) not transmitted via the broadcasting network (40) is embedded, the settop box (30) transmits the request signal for the EPG data (200) embedded in the icon (300) to the EPG head end server (20). The request signal is received by the transceiver (201) of the EPG head end server (20). The EPG data identifier (202) analyzes the request signal and identifies the requested EPG data. Then, the corresponding EPG-data is extracted from the EPG data manager (203) which manages the EPG data not transmitted via the broadcasting network (40), under the control of the controller (204), adequately encoded by the encoder (204) and transmitted to the settop box (30) through the return path using the communication network (50). Subsequently, it is displayed on the user's TV screen (60) by the action of EPG application installed into the settop box (30).

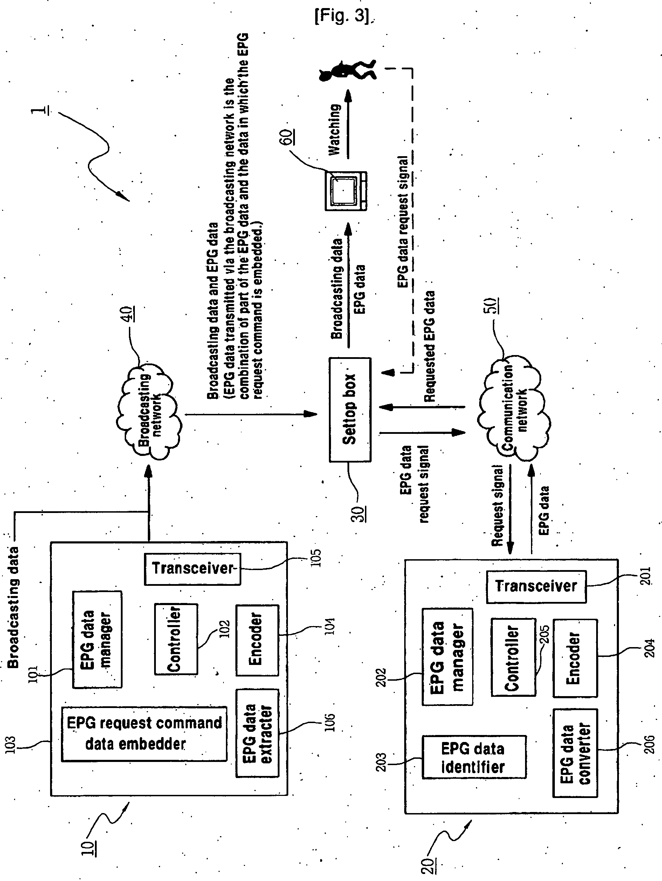

Fig. 3 is a block diagram illustrating another preferred embodiment of the system for the construction of EPG in accordance with the present invention. In the system for the construction of EPG (1) illustrated in Fig. 3, the EPG transmission server (10) further comprises an EPG data extractor (106) which extracts the remaining EPG data not transmitted via the broadcasting network (40) and transmits it to the EPG head end server (20) through the transceiver (105). The EPG data extracted by the EPG data extractor (106) is transmitted to the EPG head end server (20) and managed by the EPG data manager (203). Since the remaining EPG data not transmitted via the broadcasting network (40) is transmitted to the EPG head end server (20), the EPG head end server (20) needs not manage the EPG data (100) transmitted to the settop box (30) through the forward path. This improves the EPG data management efficiency of the EPG head end server (20). In other words, the EPG head end server (20) has only to manage the EPG data extracted by the EPG data extractor (106) of the EPG transmission server (10). Consequently, a perfect cooperation between the EPG transmission server (10) and the EPG head end server (20) is attained.

And, the EPG head end server (20) further comprises an EPG data converter (206) which converts the EPG data into a format compatible with the EPG application installed into the user's settop box (30). The EPG data converter (206) makes the EPG data provided by the EPG head end server (20) applicable to various EPG applications. A single EPG transmission server (10) is illustrated in Fig. 1, but a plurality of EPG transmission servers may used to provide a plurality of incompatible EPG data via the broadcasting network (40). In this case, the users may request incompatible EPG data to the EPG head end server (20), which may be a barrier to the perfect construction of EPG. However, in accordance with the present invention, the EPG head end server (20) provides the EPG data which is completely compatible with the EPG application installed into each of the settop boxes (30), which are incompatible with one another other. In this case, the user's request signal for the EPG data will include an EPG data identification information and the EPG application identification information of the settop box.

The present invention also relates to a method for the construction of EPG service. Particularly, the present invention relates a method for the construction of EPG service on a settop box equipped with an EPG application, through cooperative transmissions of the EPG data from an EPG transmission server transmitting through a forward path mediated by a broadcasting network, a part of EPG data to be transmitted to a settop box and data into which request commands for remaining EPG data not transmitted via the broadcasting network are embedded, and from an EPG head end server transmitting the remaining EPG data in response to user's request through a return path mediated by a communication network, which comprises the steps of: transmitting, through the forward path mediated by the broadcasting network from an EPG transmission server to the settop box, a part of the EPG data and data into which the request commands for remaining EPG data not transmitted via the broadcasting network are embedded; in response to user's request signal for the remaining EPG data, transmitting, the request signal of the user to the EPG head end server through the return path mediated by the communication network; and receiving the EPG data requested by the user from the EPG head end server through the return path mediated by the communication network and displaying it on a user's television.

As described, it should be evident that the present invention can be implemented through a variety of configurations in the aforementioned technical field without affecting, influencing or changing the scope of the invention. Therefore, it is to be understood that the examples and applications illustrated herein are intended to be in the nature of description rather than of limitation. The scope of the invention is defined by the claims.

## Claims

1. A system for the construction of EPG (electronic program guide) service (1), comprising:
an EPG transmission server (10) transmitting, through a forward path mediated by a broadcasting network a part of EPG data to be transmitted to a settop box (30) and data into which request commands for remaining EPG data not transmitted via the broadcasting network (40) are embedded;
an EPG head end server (20) transmitting the remaining EPG data in response to user's request through a return path mediated by a communication network (50);
and a settop box (30) equipped with an EPG application which processes the EPG data received from the EPG transmission server (10) and the EPG head end server (20), said system (1) being **characterized in that** the EPG transmission server (10) comprises:
an EPG data manager (101) which manages the EPG data;
a controller (102) which checks currently available broadcasting bandwidth and determines the amount of data to be transferred by the broadcasting network (40) according to the currently available broadcasting bandwidth;
an EPG request command data embedder (103) which produces the data into which request commands for the remaining EPG data not transmitted via the broadcasting network (40) are embedded;
an encoder (104) which encodes the partial EPG data transmitted via the broadcasting network (40) and the data into which the request commands for the remaining EPG data not transmitted via the broadcasting network are embedded to transmit them via the broadcasting network (40); and a transceiver (105) which receives and transmits the EPG data.

2. The system (1) as set forth in claim 1, wherein the EPG data transmitted via the broadcasting network (40) includes both a service description table and an event information table.

3. The system (1) as set forth in claim 1, wherein:
a) the EPG head end server (20) comprises: a transceiver (105) which receives the user's request signal for the remaining EPG data not transmitted through the forward path mediated by the broadcasting network (40) and transmits the requested data to the settop box (30);
an EPG data identifier which identifies the EPG data requested from the user; an EPG data manager (101) which manages the EPG data; an encoder which encodes the EPG data to transmit the EPG data through the forward path mediated by the communication network; and a controller (102) which controls the transmission of the EPG data through the forward path mediated by the communication network;
and
b) a settop box (30) is equipped with an EPG application which processes the EPG data received from the EPG transmission server (10) and the EPG head end server (20).

4. The system (1) as set forth in claim 3, wherein the EPG transmission server (10) further comprises an EPG data extractor which extracts the EPG data not transmitted via the broadcasting network (40) from the EPG data manager (101) and transmits it to the EPG head end server (20).

5. The system (1) as set forth in claim 3, wherein the EPG head end server (20) further comprises an EPG data converter which converts the EPG data into a format compatible with the EPG application installed into the settop box (30).

6. A method for the construction of EPG (electronic program guide) service on a settop box (30) equipped with an EPG application through cooperative transmissions of the EPG data from an EPG transmission server (10) transmitting through a forward path mediated by a broadcasting network, a part of EPG data to be transmitted to the settop box (30) and data into which request commands for remaining EPG data not transmitted via the broadcasting network (40) are embedded, and from an EPG head end server (20) transmitting the remaining EPG data in response to user's request through a return path mediated by a communication network, which comprises the steps of: transmitting, through the forward path mediated by the broadcasting network (40) from the EPG transmission server (10) to the settop box (30), the partial EPG data and the data into which the request commands for remaining EPG data are embedded; in response to user's request signal for the remaining EPG data, transmitting, the request signal of the user to the EPG head end server (20) through the return path mediated by the communication network; and receiving the EPG data requested by the user from the EPG head end server (20) through the return path mediated by the communication network and displaying it on a user's television, **characterized in that** the amount of data that is transmitted via broadcasting network (40) is determined according to the currently available broadcasting bandwidth.

7. The method as set forth in claim 6, wherein the EPG data transmitted via the broadcasting network (40) includes both a service description table and an event information table.

8. The method as set forth in claim 6, wherein the user's request signal for the remaining EPG data includes an EPG identification information and an EPG application identification information, and the EPG head end server (20) identifies the EPG application installed into the settop box (30) from the EPG application identification information and converts the requested EPG data to a format compatible with the EPG application and transmits it to the settop box (30) through the return path.

## Patentansprüche

1. System für die Erstellung eines EPG (Electronic Program Guide)-Dienstes (1), umfassend:
einen EPG-Sendeserver (10), der, über einen durch ein Rundfunknetzwerk vermittelten Vorwärtspfad, einen Teil von an eine Settopbox (30) zu sendenden EPG-Daten und von Daten, in denen Anfragebefehle für verbleibende EPG-Daten, die nicht über das Rundfunknetzwerk (40) gesendet werden, eingebettet sind, sendet,
einen EPG-Headend-Server (20), der die verbleibenden EPD-Daten in Antwort auf eine Anfrage eines Benutzers über einen durch ein Kommunikationsnetzwerk (50) vermittelten Rückpfad sendet, und
eine Settopbox (30), die mit einer EPG-Anwendung ausgestattet ist, die die von dem EPG-Sendeserver (10) und dem EPG-Headend-Server (20) empfangenen EPG-Daten verarbeitet,
wobei das System (1) **dadurch gekennzeichnet ist, dass** der EPG-Sendeserver (10) umfasst:
einen EPG-Daten-Verwalter (101), der die EPG-Daten verwaltet,
eine Steuereinrichtung (102), die die aktuell verfügbare Rundfunkbandbreite prüft und die durch das Rundfunknetzwerk (40) zu übertragende Datenmenge in Übereinstimmung mit der aktuell verfügbaren Rundfunkbandbreite bestimmt,
einen EPG-Anfragebefehlsdaten-Einbetter (103), der die Daten erzeugt, in denen Anfragebefehle für die verbleibenden EPG-Daten, die nicht über das Rundfunknetzwerk (40) gesendet werden, eingebettet sind,
einen Codierer (104), der die über das Rundfunknetzwerk (40) gesendeten Teil-EPG-Daten und die Daten, in denen die Anfragebefehle für die verbleibenden EPG-Daten, die nicht über das Rundfunknetzwerk gesendet werden, eingebettet sind, codiert, um diese über das Rundfunknetzwerk (40) zu senden, und
einen Sendeempfänger (105), der die EPG-Daten empfängt und sendet.

2. System (1) nach Anspruch 1, wobei die über das Rundfunknetzwerk (40) gesendeten EPG-Daten eine Dienstbeschreibungstabelle und eine Ereignisinformationstabelle enthalten.

3. System (1) nach Anspruch 1, wobei:
a) der EPG-Headend-Server (20) um- fasst:
einen Sendeempfänger (105), der das Anfragesignal des Benutzers für die verbleibenden EPG-Daten, die nicht über den durch das Rundfunknetzwerk (40) vermittelten Vorwärtspfad gesendet werden, empfängt und die angefragten Daten an die Settopbox (30) sendet,
einen EPG-Daten-Identifizierer, der die von dem Benutzer angefragten EPG-Daten identifiziert,
einen EPG-Daten-Verwalter (101), der die EPG-Daten verwaltet,
einen Codierer, der die EPG-Daten codiert, um die EPG-Daten über den durch das Kommunikationsnetzwerk vermittelten Vorwärtspfad zu senden, und
eine Steuereinrichtung (102), die das Senden der EPG-Daten über den durch das Kommunikationsnetzwerk vermittelten Vorwärtspfad steuert, und
b) eine Settopbox (30), die mit einer EPG-Anwendung ausgestattet ist, die die von dem EPG-Sendeserver (10) und dem EPG-Headend-Server empfangenen EPG-Daten verarbeitet.

4. System (1) nach Anspruch 3, wobei der EPG-Sendeserver (10) weiterhin einen EPG-Daten-Extraktor umfasst, der die nicht über das Rundfunknetzwerk (40) gesendeten EPG-Daten von dem EPG-Daten-Verwalter (101) extrahiert und diese an den EPG-Headend-Server (20) sendet.

5. System (1) nach Anspruch 3, wobei der EPG-Headend-Server (20) weiterhin einen EPG-Daten-Wandler umfasst, der die EPG-Daten zu einem Format wandelt, das mit der in der Settopbox (30) installierten EPG-Anwendung kompatibel ist.

6. Verfahren zum Erstellen eines EPG (Electronic Program Guide)-Dienstes an einer mit einer EPG-Anwendung ausgestatteten Settopbox (30) durch zusammenwirkende Sendungen der EPG-Daten von einem EPG-Sendeserver (10), der über einen durch ein Rundfunknetzwerk vermittelten Vorwärtspfad, einen Teil von an die Settopbox (30) zu sendenden EPG-Daten und Daten, in denen Anfragebefehle für verbleibende EPG-Daten, die nicht über das Rundfunknetzwerk (40) gesendet werden, eingebettet sind, sendet, und von einem EPG-Headend-Server (20), der die verbleibenden EPD-Daten in Antwort auf eine Anfrage eines Benutzers über einen durch ein Kommunikationsnetzwerk vermittelten Rückpfad sendet, wobei das Verfahren die folgenden Schritte umfasst:
Senden, über den durch ein Kommu- nikationsnetzwerk (40) vermittelten Vorwärtspfad von dem EPG-Sendeserver (10) an die Settopbox (30), der Teil-EPG-Daten und der Daten, in denen die Anfragebefehle für die verbleibenden EPG-Daten eingebettet sind,
in Antwort auf ein Anfragesignal des Benutzers für die verbleibenden EPG-Daten, Senden des Anfragesignals des Benutzers an den EPG-Headend-Server (20) über den durch das Kommunikationsnetzwerk vermittelten Rückpfad, und
Empfangen der durch den Benutzer angefragten EPG-Daten von dem EPG-Headend-Server (20) über den durch das Kommunikationsnetzwerk vermittelten Rückpfad und Anzeigen derselben an einem Fernsehgerät des Benutzers,
**dadurch gekennzeichnet, dass** die über das Rundfunknetzwerk (40) gesendete Datenmenge in Übereinstimmung mit der aktuell verfügbaren Rundfunkbandbreite bestimmt wird.

7. Verfahren nach Anspruch 6, wobei die über das Rundfunknetzwerk (40) gesendeten EPG-Daten eine Dienstbeschreibungstabelle und eine Ereignisinformationstabelle enthalten.

8. Verfahren nach Anspruch 6, wobei das Anfragesignal des Benutzers für die verbleibenden EPG-Daten EPG-Identifikationsinformationen und EPG-Anwendungs-Identifikationsinformationen enthält und wobei der EPG-Headend-Server (20) die in der Settopbox (30) installierte EPG-Anwendung aus den EPG-Anwendungs-Identifikationsinformationen identifiziert und die angefragten EPG-Daten zu einem Format, das mit der EPG-Anwendung kompatibel ist, wandelt und über den Rückpfad an die Settopbox (30) sendet.

## Revendications

1. Système pour l'élaboration d'un service de guide de programme électronique (EPG) (1), comprenant : un serveur de transmission de guide EPG (10) transmettant, à travers un chemin aller médié par un réseau de diffusion, une partie de données de guide EPG à transmettre à un boîtier décodeur (30), et des données dans lesquelles des commandes de demande concernant des données de guide EPG restantes non transmises par l'intermédiaire du réseau de diffusion (40) sont intégrées ; un serveur de tête de réseau de guide EPG (20) transmettant les données de guide EPG restantes en réponse à une demande de l'utilisateur, à travers un chemin retour médié par un réseau de communication (50) ; et un boîtier décodeur (30) équipé d'une application de guide EPG qui traite les données de guide EPG reçues en provenance du serveur de transmission de guide EPG (10) et du serveur de tête de réseau de guide EPG (20), ledit système (1) étant **caractérisé en ce que** le serveur de transmission de guide EPG (10) comprend : un gestionnaire de données de guide EPG (101) qui gère les données de guide EPG ; un contrôleur (102) qui vérifie une bande passante de diffusion disponible à cet instant et détermine la quantité de données devant être transférées par le réseau de diffusion (40) selon la bande passante de diffusion disponible à cet instant ; un intégrateur de données de commandes de demande de guide EPG (103) qui produit les données dans lesquelles des commandes de demande concernant les données de guide EPG restantes non transmises par l'intermédiaire du réseau de diffusion (40) sont intégrées ; un codeur (104) qui code les données de guide EPG partielles transmises par l'intermédiaire du réseau de diffusion (40) et les données dans lesquelles les commandes de demande concernant les données de guide EPG restantes non transmises par l'intermédiaire du réseau de diffusion sont intégrées, en vue de les transmettre par l'intermédiaire du réseau de diffusion (40) ; et un émetteur-récepteur (105) qui reçoit et transmet les données de guide EPG.

2. Système (1) selon la revendication 1, dans lequel les données de guide EPG transmises par l'intermédiaire du réseau de diffusion (40) incluent à la fois une table de description de service et une table d'informations sur les événements.

3. Système (1) selon la revendication 1, dans lequel :
a) le serveur de tête de réseau de guide EPG (20) comprend : un émetteur-récepteur (105) qui reçoit le signal de demande de l'utilisateur concernant les données de guide EPG restantes non transmises à travers le chemin aller médié par le réseau de diffusion (40) et transmet les données demandées au boîtier décodeur (30) ; un identifiant de données de guide EPG qui identifie les données de guide EPG demandée par l'utilisateur ; un gestionnaire de données de guide EPG (101) qui gère les données de guide EPG ; un codeur qui code les données de guide EPG en vue de transmettre les données de guide EPG à travers le chemin aller médié par le réseau de communication ; et un contrôleur (102) qui commande la transmission des données de guide EPG à travers le chemin aller médié par le réseau de communication ; et
b) un boîtier décodeur (30) est équipé d'une application de guide EPG qui traite les données de guide EPG reçues à partir du serveur de transmission de guide EPG (10) et du serveur de tête de réseau de guide EPG (20).

4. Système (1) selon la revendication 3, dans lequel le serveur de transmission de guide EPG (10) comprend en outre un extracteur de données de guide EPG qui extrait les données de guide EPG non transmises par l'intermédiaire du réseau de diffusion (40), du gestionnaire de données de guide EPG (101), et les transmet au serveur de tête de réseau de guide EPG (20).

5. Système (1) selon la revendication 3, dans lequel le serveur de tête de réseau de guide EPG (20) comprend en outre un convertisseur de données de guide EPG qui convertit les données de guide EPG en un format compatible avec l'application de guide EPG installée dans le boîtier décodeur (30).

6. Procédé d'élaboration d'un service de guide de programme électronique (EPG) sur un boîtier décodeur (30) équipé d'une application de guide EPG, à travers des transmissions coopératives des données de guide EPG à partir d'un serveur de transmission de guide EPG (10) transmettant, à travers un chemin aller médié par un réseau de diffusion, une partie de données de guide EPG à transmettre au boîtier décodeur (30), et des données dans lesquelles des commandes de demande concernant des données de guide EPG restantes non transmises par l'intermédiaire du réseau de diffusion (40) sont intégrées, et à partir d'un serveur de tête de réseau de guide EPG (20) transmettant les données de guide EPG restantes en réponse à une demande de l'utilisateur, à travers un chemin retour médié par un réseau de communication, lequel procédé comporte les étapes consistant à : transmettre, à travers le chemin aller médié par le réseau de diffusion (40), du serveur de transmission de guide EPG (10) au boîtier décodeur (30), les données de guide EPG partielles et les données dans lesquelles les commandes de demande concernant des données de guide EPG restantes sont intégrées ; en réponse à un signal de demande de l'utilisateur concernant les données de guide EPG restantes, transmettre le signal de demande de l'utilisateur au serveur de tête de réseau de guide EPG (20) à travers le chemin retour médié par le réseau de communication ; et recevoir les données de guide EPG demandées par l'utilisateur à partir du serveur de tête de réseau de guide EPG (20) à travers le chemin retour médié par le réseau de communication et les afficher sur le téléviseur d'un utilisateur, **caractérisé en ce que** la quantité de données transmises par l'intermédiaire du réseau de diffusion (40) est déterminée en fonction de la bande passante de diffusion disponible à cet instant.

7. Procédé selon la revendication 6, dans lequel les données de guide EPG transmises par l'intermédiaire du réseau de diffusion (40) incluent à la fois une table de description de service et une table d'informations sur les événements.

8. Procédé selon la revendication 6, dans lequel le signal de demande de l'utilisateur concernant les données de guide EPG restantes inclut des informations d'identification de guide EPG et des informations d'identification d'application de guide EPG, et dans lequel le serveur de tête de réseau de guide EPG (20) identifie l'application de guide EPG installée dans le boîtier décodeur (30) à partir des informations d'identification d'application de guide EPG, et convertit les données de guide EPG requises en un format compatible avec l'application de guide EPG, et les transmet au boîtier décodeur (30) à travers le chemin retour.
